# EUROPEAN PATENT APPLICATION

(11) **EP 4 841 793 A1**
(43) Date of publication of application: **18.11.2026**
(21) Application number: 25835356.4
(22) Date of filing: 14.04.2025
(51) Int. Cl.: H01M 50/449, H01M 50/403, H01M 50/414, H01M 50/489, H01M 10/42, H01M 10/052, H01M 10/0525, H01M 10/054

(54) **SEPARATOR AND PREPARATION METHOD THEREFOR, AND SECONDARY BATTERY**

(30) Priority: 26.03.2025 CN 202510367281
(71) Applicant: Huizhou Liwinon Electronic Technology Co., Ltd., Huizhou, Guangdong 516100 (CN)
(72) Inventor: ZHU, Yun, Huizhou, Guangdong 516000 (CN); LI, Jianglan, Huizhou, Guangdong 516000 (CN); SUN, Xianwei, Huizhou, Guangdong 516000 (CN); GAO, Yan, Huizhou, Guangdong 516000 (CN); LI, Xue, Huizhou, Guangdong 516000 (CN); MA, Bin, Huizhou, Guangdong 516000 (CN); RONG, Jisong, Huizhou, Guangdong 516000 (CN); CHEN, Long, Huizhou, Guangdong 516000 (CN); WU, Shengben, Huizhou, Guangdong 516000 (CN); LAI, Xulun, Huizhou, Guangdong 516000 (CN)
(74) Representative: Metida
(86) International application number: PCT/CN2025/088719
(87) International publication number: WO 2026/199640

(57) **Abstract**

The present disclosure relates to a separator, a preparation method thereof, and a secondary battery, and belongs to the technical field of secondary batteries. The separator provided by the present disclosure includes a substrate and a polymer coating formed on at least one side of the substrate. The polymer coating includes at least two coating strips spaced apart from each other. Each of the at least two coating strips of the polymer coating includes a main polymer and an auxiliary polymer. The main polymer forms a porous structural layer. The auxiliary polymer is embedded in the porous structural layer and forms a protrusion on a surface of the porous structural layer. The separator obtained by the specific method of the present disclosure can be used to assemble a secondary battery through hot pressing. This secondary battery exhibits an excellent electrolyte retention capacity, a low battery cell expansion rate, and a high capacity retention rate. This secondary battery can significantly mitigate the dendrite formation in corner regions of a battery cell, ensure balanced properties of a battery cell, and offer high application value.

## Description

### TECHNICAL FIELD

The present disclosure relates to the technical field of secondary batteries, and in particular to a separator, a preparation method thereof, and a secondary battery.

### BACKGROUND

Currently, separators in lithium-ion batteries in the art are typically ceramic separators that each has a polymer coating on one or both sides to ensure adhesion of the ceramic separators to electrodes. Generally, the polymer coating includes a water-based polymethyl methacrylate (PMMA) coating, a water-based polyvinylidene fluoride (PVDF) coating, and a conventional oil-based PVDF coating. These polymer coatings have a low porosity, a poor electrolyte retention capacity, and a low ionic conductivity. As a result, lithium-ion batteries with the ceramic separators are prone to rapid capacity attenuation during fast charging.

Further, the water-based polymer coatings exhibit relatively low adhesion, which can easily lead to significant thickness expansion of a battery cell. The conventional oil-based PVDF coating shows relatively strong adhesion, resulting in minor expansion of the battery cell. However, the conventional oil-based PVDF coating generally has an average pore size of 0.5 µm or less and a low porosity. Consequently, during a fast-charging process of lithium-ion batteries, the oil-based PVDF coating can lead to the deposition of metallic dendrites at the interface of a negative electrode. When growing to a certain size, sharp dendrites can puncture a separator, thereby compromising safety. In lithium-ion batteries, the deposition of metallic dendrites is commonly referred to as "lithium plating".

The major factors affecting the performance of traditional separators are rapid consumption of the electrolyte and the battery cell expansion during fast charging of secondary batteries. These factors reduce the gap between electrodes of a secondary battery and hinder the electrolyte replenishment, resulting in insufficient electrolyte retention in later stages and a shortened cycling life of the secondary battery. Additionally, corner regions of a battery cell of a secondary battery undergo the maximum expansion stress across the battery cell. Thus, there is very significant electrolyte consumption and a particularly prominent risk of lithium plating at these corner regions.

Therefore, in view of the aforementioned issues, there is an urgent need to develop a secondary battery based on a novel separator. This novel separator can enhance the electrolyte retention capacity of the secondary battery, reduce the thickness expansion of a battery cell of the secondary battery, and improve the battery cell structure of the secondary battery, thereby lowering the risk of dendrite formation. Moreover, the secondary battery possesses superior cycling performance and high application value.

### SUMMARY

An objective of the present disclosure is to overcome the shortcomings in the prior art and provide a separator, a preparation method thereof, and a secondary battery. The separator provided by the present disclosure exhibits an excellent electrolyte retention capacity. When used in secondary batteries, the separator can significantly alleviate the battery cell expansion rate, enhance capacity retention rate, and reduce the formation of metallic dendrites. Thus, the separator has high application value.

To achieve the above objective, the present disclosure adopts the following technical solutions.

In a first aspect, the present disclosure provides a separator, comprising a substrate and a polymer coating arranged on at least one side of the substrate, where the polymer coating includes at least two coating strips spaced apart from each other;
each of the at least two coating strips of the polymer coating includes a main polymer and an auxiliary polymer; the main polymer forms a porous structural layer; and the auxiliary polymer is embedded in the porous structural layer and forms a protrusion on a surface of the porous structural layer.

To enhance the electrolyte retention capacity in the corner region of a battery cell of a secondary battery, the present disclosure provides a separator. The polymer coating of the separator is arranged as at least two coating strips spaced apart from each other. In this way, the polymer coating does not completely cover a side of the substrate, but instead leaves a certain spacing between the at least two coating strips, such that a groove can be formed between two adjacent coating strips to accommodate an increased amount of an electrolyte.

A specific spacing between coating strips and a specific width of each coating strip can effectively increase the storage space for an electrolyte, thereby enhancing the performance of a battery cell. If the width of each coating strip is inappropriate, the application of the polymer coating will be affected to compromise the electrolyte retention capacity of the separator, resulting in significant degradation of the application performance of the separator and a serious risk of dendrite formation. If the coating strips are too narrow, the adhesive strength of the polymer coating will be compromised, leading to significant thickness expansion of the battery cell. If the coating strips are not spaced apart from each other, the separator will demonstrate a poor electrolyte retention capacity and have a high risk of metallic dendrite formation.

In addition, the present disclosure designs a polymer coating with a specific structure. This specific structure is a compressible configuration formed by a porous main polymer and an auxiliary polymer that is embedded in the main polymer and protrudes from a surface of the porous main polymer. This specific structure can increase the gap between electrodes and the separator at corners of a secondary battery, effectively enlarge the inter-electrode spacing in a corner region of a battery cell of a secondary battery including the separator of the present disclosure (the inter-electrode spacing is controlled through the separator between electrodes), and enhance the electrolyte retention capacity of the separator in the corner region of the battery cell, thereby alleviating the issues of electrolyte depletion and lithium plating in the corner region of the battery cell after long-term cycling. This specific structure also exhibits compressibility. As a result, a thickness of a main body region of a battery cell can be reduced by hot pressing during battery fabrication, thereby minimizing the overall thinness of the battery cell.

When used in a secondary battery, the separator provided by the present disclosure can exhibit a prominent electrolyte retention capacity, a low battery cell expansion rate and a high capacity retention rate for the secondary battery, significantly mitigates the metallic dendrite formation in corner regions, and balances the properties of a battery cell. Further, no equipment reconstruction is involved, and no adverse effect is brought to a chemical system. Moreover, the technical solution of the present disclosure has a low cost, no performance loss, good generalizability, and a promising application prospect.

Preferably, the substrate is at least one selected from the group consisting of polyethylene, polypropylene, polyethylene terephthalate, polyimide, and aramid.

As a preferred embodiment of the present disclosure, on one or two sides of the substrate to be applied with the polymer coating, a ceramic material layer may be first coated, and then the polymer coating is applied. A ceramic material in the ceramic material layer is at least one selected from the group consisting of alumina, boehmite, magnesium oxide, magnesium hydroxide, barium titanate, aluminum hydroxide, silica, aluminum nitride, lithium aluminum titanium phosphate, and lithium lanthanum zirconium oxide.

Preferably, an average pore size of a micropore in the porous structural layer is in a range of from 0.5 µm to 1.5 µm; and/or
a median particle size D₅₀ of a secondary particle of the auxiliary polymer is 3 µm ≤ D₅₀ ≤ 15 µm.

As a preferred embodiment of the present disclosure, the average pore size of the micropore in the porous structural layer is any one selected from the group consisting of 0.5 µm, 0.6 µm, 0.7 µm, 0.8 µm, 0.9 µm, 1 µm, 1.1 µm, 1.2 µm, 1.3 µm, 1.4 µm, and 1.5 µm, or a range defined by any two of these values.

As a preferred embodiment of the present disclosure, the median particle size D₅₀ of the secondary particle of the auxiliary polymer is any one selected from the group consisting of 3 µm, 4 µm, 5 µm, 6 µm, 7 µm, 8 µm, 9 µm, 10 µm, 11 µm, 12 µm, 13 µm, 14 µm, and 15 µm, or a range defined by any two of these values.

The auxiliary polymer is preferably in a form of secondary particles. After the secondary particles of the auxiliary polymer are compressed, gaps remain among the secondary particles, which can retain ion transport pathways, without deteriorating the cycling performance of a battery cell.

By controlling a concentration of the main polymer during a preparation process, different average pore sizes of the micropore in the porous structural layer can be achieved. The average pore size of the micropore in the porous structural layer of the polymer coating is controlled to be 0.5 µm to 1.5 µm, so that the separator can be guaranteed to have a high electrolyte retention capacity. When the average pore size of the micropore is less than 0.5 µm, the polymer coating of the separator exhibits a poor electrolyte retention capacity and is prone to lithium plating. When the average pore size of the micropore is more than 1.5 µm, the polymer coating of the separator has poor adhesion, and the thickness expansion rate of the battery cell increases.

Preferably, the porous structural layer formed by the main polymer has a compressibility coefficient R₁ of 0.05 ≤ R₁ ≤ 0.3 under a hot pressing condition of 85°C, 1.2 MPa, and 50 min; and/or
the auxiliary polymer has a compressibility coefficient R₂ of 0.6 ≤ R₂ < 1.0 under a hot pressing condition of 85°C, 1.2 MPa, and 50 min; and/or
the porous structural layer formed by the main polymer has a thickness of 0.5 µm to 5 µm, and the protrusion formed by the auxiliary polymer has a height of 1 µm to 10 µm.

A compressibility coefficient R refers to a ratio of a compressible thickness of a polymer to an initial thickness of the polymer. The auxiliary polymer preferably has excellent compressibility. There may be gaps among secondary particle agglomerates of the auxiliary polymer, and the secondary particle agglomerates are easily compressed. The compressibility coefficient R₂ of the auxiliary polymer under a hot pressing condition of 85 °C, 1.2 MPa, and 50 min satisfies a relationship of 0.6 ≤ R₂ < 1.0. In contrast, the porous structural layer formed by the main polymer can hardly be compressed. The compressibility coefficient R₁ of the main polymer under the same hot pressing condition satisfies a relationship of 0.05 ≤ R₁ ≤ 0.3. When the compressibility coefficient R₂ of the auxiliary polymer is within the specified range, the auxiliary polymer can be distributed in the porous structural layer with the specific pore size and form a protrusion on a surface of the porous structural layer. That is, during the fabrication of a secondary battery, after the polymer coating undergoes hot pressing, the auxiliary polymer can be compressed to a certain extent. However, the auxiliary polymer cannot be compressed to the same thickness as the main polymer, nor will be fully embedded in the porous structural layer formed by the main polymer, but inevitably forms a protrusion to a certain extent. Further, compared with the polymer coating in a main body region of a battery cell, the polymer coating in a corner region of the battery cell is subjected to a lower hot-pressing pressure, resulting in relatively less compression for the auxiliary polymer. Consequently, a large gap can be formed in the corner region to provide a storage space for the electrolyte. After a secondary battery fabricated using this separator is subjected to hot pressing, a reduction in thickness of the polymer coating in the main body region of the battery cell is maintained in a range of from 3 µm to 5 µm. As a result, a certain disparity is created between the inter-electrode spacing in the main body region of the battery cell and the inter-electrode spacing in the corner region of the battery cell, which ensures that the inter-electrode spacing in the corner region of the battery cell of the secondary battery remains within the required range.

On one hand, the larger the compression of the polymer coating in the main body region of the battery cell, the smaller the proportion of the thickness of the polymer coating and the thinner the secondary battery; on the other hand, the larger the compression of the polymer coating in the main body region of the battery cell, the higher the flatness of the coating after compression and the higher the overall flatness of the secondary battery. However, if the auxiliary polymer is not added or the auxiliary polymer has an excessively small particle size, the polymer coating may undergo excessive compression during the fabrication of the secondary battery to cause the closure of gaps among the secondary particles and the blockage of pores of the substrate, ultimately resulting in a high risk of metallic dendrite formation in the main body region of the battery cell.

Preferably, the spacing between two adjacent ones of the at least two coating strips of the polymer coating is in a range of from 0.15 mm to 2.5 mm; and/or
a width of each coating strip is in a range of from 0.5 mm to 3 mm.

Further preferably, a ratio of an area of the polymer coating to an area of a coated side of the substrate is 60% to 85%. The area of the coated side of the substrate refers to an area of one or two sides of the substrate that are applied with the polymer coating. When the polymer coating is applied to only one side of the substrate, the area of the coated side of the substrate refers to an area of the side of the substrate that is applied with the polymer coating. When the polymer coating is applied to two sides of the substrate, the area of the coated side of the substrate refers to a sum of areas of the two sides of the substrate that are applied with the polymer coating.

As a preferred embodiment of the present disclosure, the ratio of the area of the polymer coating to the area of the coated side of the substrate is any one selected from the group consisting of 60%, 65%, 70%, 75%, 80%, and 85%, or a range defined by any two of these values. However, it should be noted that the ratio of the area of the polymer coating to the area of the coated side of the substrate is not limited to the specific values listed above, and other suitable ratios in the range may be selected by those skilled in the art based on practical needs.

When an area of the polymer coating distributed on the coated side of the substrate is too small, the polymer coating demonstrates low adhesion, and the expansion in battery cell thickness increases after multiple charge-discharge cycles. If the area of the polymer coating distributed on the coated side of the substrate exceeds 85%, the gap between the at least two coating strips of the polymer coating will be too small, resulting in a poor electrolyte retention capacity of the separator and a high risk of metallic dendrite formation.

Further preferably, the spacing between two adjacent ones of the at least two coating strips of the polymer coating is in a range of from 0.2 mm to 0.4 mm; and/or
the width of each coating strip is in a range of from 0.6 mm to 0.85 mm.

Further preferably, a thickness of the polymer coating is in a range of from 5 µm to 10 µm; and/or
when the ratio of the area of the polymer coating to the area of the coated side of the substrate is defined as S, in %, and the median particle size D₅₀ of the secondary particle of the auxiliary polymer is defined as d, in µm, the S and the d satisfies a quantitative relationship of 10 ≤ 0.1 S + d ≤ 12.

When the median particle size D₅₀ of the secondary particles of the auxiliary polymer is defined as d, in µm, a value of the d is related to a protrusion degree of the auxiliary polymer on the main polymer layer, and affects a vertical height of a gap between the at least two coating strips of the polymer coating. When the ratio of the area of the polymer coating to the area of the coated side of the substrate is defined as S, in %, a value of the S affects a cross-sectional area of the gap between the at least two coating strips of the polymer coating. When the thickness of the polymer coating is controlled within the preferred range mentioned above, these two parameters (namely the d and the S) jointly regulate a spatial capacity of the gap between the at least two coating strips of the polymer coating in each region of a battery. When the relationship between these two parameters falls within the range defined above, the separator can provide an appropriate storage space for the electrolyte to well mitigate the risk of metallic dendrite formation in a battery and reduce the thickness expansion of the battery cell, thereby improving the overall performance of the battery.

Preferably, each of the at least two coating strips is inclined to a width direction of the substrate (namely, a direction perpendicular to a length direction of the substrate) at an included angle, and the included angle between each of the at least two coating strips and the width direction of the substrate is 30° to 60°.

To enhance electrolyte retention performance while giving consideration to the stacking and winding processes during the secondary battery fabrication process, the at least two coating strips are applied in a spaced and inclined pattern. Thus an extension direction of each of the coating strips and the width direction of the substrate form a specified included angle, such as 30°, 45°, and 60°, that is, the extension direction is not parallel to the width direction. Preferably, the extension direction of each coating strip and the width direction of the substrate form an included angle of 45°±3°. During the stacking process of the battery cell, the extension direction of each coating strip and the width direction of the substrate may form a specified included angle, or the extension direction may be parallel or perpendicular to the width direction.

Preferably, the main polymer is at least one selected from the group consisting of polyvinylidene fluoride (PVDF), a poly(vinylidene fluoride-co-hexafluoropropylene) copolymer, a poly(vinylidene fluoride-co-trifluoroethylene) copolymer, a poly(vinylidene fluoride-co-chlorotrifluoroethylene) copolymer, a poly(vinylidene fluoride-co-tetrafluoroethylene) copolymer, a poly(vinylidene fluoride-co-trifluoroethylene-co-chlorotrifluoroethylene) copolymer, a poly(vinylidene fluoride-co-trifluoroethylene-co-chlorofluoroethylene) copolymer, and polymethyl methacrylate (PMMA); and/or
the auxiliary polymer is at least one selected from the group consisting of polyethylene, polypropylene, polybutene, poly(4-methyl-1-pentene), polytetrafluoroethylene, polyethylene wax, and oxidized polyethylene wax.

In a second aspect, the present disclosure provides a preparation method of the separator, including steps as follows:
(1) dissolving the main polymer in an organic solvent to obtain a main polymer solution, adding and dispersing the auxiliary polymer to obtain a polymer coating material; and
(2) applying the polymer coating material on at least one side of the substrate in a spaced pattern, soaking a coated substrate in a coagulation-bath solution, taking out a soaked substrate, washing, and oven-drying to obtain the separator.

With the preparation method of the present disclosure, a separator including a polymer coating can be prepared. The polymer coating includes a main polymer and an auxiliary polymer. The main polymer forms a porous structural layer. The auxiliary polymer is embedded in the porous structural layer and forms a protrusion on a surface of the porous structural layer. The specific structure of the polymer coating enables the application performance of the separator.

Preferably, the organic solvent is at least one selected from the group consisting of N-methylpyrrolidone (NMP), N,N-dimethylformamide, N,N-dimethylacetamide (DMAC), and acetone; and the coagulation-bath solution includes at least one selected from the group consisting of the NMP, the N,N-dimethylformamide, the DMAC, the acetone, ethanol, isopropanol, and water.

Further preferably, the organic solvent is the DMAC, and the coagulation-bath solution is an aqueous solution of the DMAC.

Preferably, a weight percentage of the main polymer in the main polymer solution is 4% to 15%; and/or a mass ratio of the main polymer to the auxiliary polymer is (3-4):(1-2).

In a third aspect, the present disclosure provides a secondary battery including a positive electrode, the separator described above, and a negative electrode successively, wherein an inter-electrode spacing in a corner region of a battery cell of the secondary battery is defined as A, an inter-electrode spacing in a main body region of the battery cell of the secondary battery is defined as B, and the A and the B satisfy a relationship of 3 µm ≤ A - B ≤ 5 µm.

In the secondary battery provided in the present disclosure, the inter-electrode spacing A in the corner region of the battery cell and the inter-electrode spacing B in the main body region of the battery cell satisfy the following relationship: 3 µm ≤ A - B ≤ 5 µm. Through the specific separator arranged between the electrodes, the present disclosure increases the inter-electrode spacing in the corner region of the battery cell of the secondary battery to enhance both the electrolyte wetting rate and the electrolyte retention capacity in the corner region of the battery cell, thereby effectively mitigating the issues of electrolyte depletion and metallic dendrite formation in the corner region of the battery cell after long-term cycling.

If a difference between the inter-electrode spacing A in the corner region of the battery cell of the secondary battery and the inter-electrode spacing B in the main body region of the battery cell of the secondary battery, namely, A - B, is less than 3 µm, the inter-electrode spacing in the corner region of the battery cell will be too small, and there will be an insufficient electrolyte retention capacity in the corner region of the battery cell and a limited improvement effect for the metallic dendrite formation in the corner region of the battery cell. If A - B is more than 5 µm, the inter-electrode spacing in the corner region of the battery cell will be too large, and there will be a too-long ion transport pathway, so that poor metal-ion intercalation occurs in the secondary battery after cycling, which promotes the deposition of metallic dendrites and thus adversely affects the corner region of the battery cell.

It should be noted that the secondary battery mentioned herein includes, but is not limited to, a lithium-ion battery, a sodium-ion battery, a potassium-ion battery, a zinc-ion battery, a lithium metal battery, a lithium-oxygen battery, and a lithium-sulfur battery.

In a fourth aspect, the present disclosure further provides an electric device, comprising the secondary battery described above.

The secondary battery of the present disclosure can be used in an electric device with a battery as a power source or in various energy storage systems with a battery as an energy storage component. The electric device includes, but is not limited to, a mobile phone, a tablet, a laptop, an electric toy, a power tool, an electromobile, an electric vehicle, a ship, a spacecraft, etc.

Compared with the prior art, the present disclosure has the following beneficial effects:

In the present disclosure, the polymer coating of the separator is designed to have a structure that is compressible within a specific range. Thus, when used in the fabrication of a secondary battery cell, the separator can increase the inter-electrode spacing in a corner region of the secondary battery cell within an appropriate range. In addition, by optimizing the spaced distribution, spacing, and area of the polymer coating of the separator, a polymer coating with a specific structure (this specific structure is a compressible configuration formed by a porous main polymer and an auxiliary polymer that is embedded in the main polymer and protrudes from a surface of the main polymer) is obtained, so that regions uncovered by the polymer coating can form grooves with high electrolyte-accommodating capability to further enhance the electrolyte retention capacity in the corner region of the battery cell, extend the cycling life of the secondary battery, mitigate the formation of metallic dendrites, and reduce the thickness expansion rate of the battery cell. The separator provided by the present disclosure has a low preparation cost, no performance loss and good generalizability, and demonstrates a promising application prospect in secondary batteries.

### BRIEF DESCRIPTION OF THE DRAWINGS

FIG. 1 is a schematic distribution diagram of a polymer coating of a separator in Example 1 of the present disclosure;
FIG. 2 is a structural schematic diagram of the separator in Example 1 of the present disclosure; and
FIG. 3 is a structural schematic diagram of a secondary battery in Example 1 of the present disclosure.

### DETAILED DESCRIPTION OF THE EMBODIMENTS

To better illustrate the objective, technical solutions, and advantages of the present disclosure, the present disclosure will be further explained below with reference to specific examples. In the following examples, unless otherwise specified, experimental methods used are conventional ones, and materials and reagents used are commercially available.

In the following examples and comparative examples, the polyethylene used is purchased from Sinopec Yanshan Petrochemical Company (Grade: LD605), and the poly(vinylidene fluoride-co-hexafluoropropylene) copolymer used is purchased from Arkema Company, France (Grade: LBG).

### Example 1

An example of the separator and the secondary battery according to the present disclosure is provided. A preparation method of the separator in this example is as follows:
(1) A main polymer (namely, poly(vinylidene fluoride-co-hexafluoropropylene) (PVDF-HFP) copolymer) was added to N,N-dimethylacetamide (DMAC) as a solvent, and stirred at 60 °C to completely dissolve it, yielding a PVDF-HFP copolymer solution where a weight percentage of PVDF-HFP copolymer in the PVDF-HFP copolymer solution was 8%. Then, an auxiliary polymer (namely, a polyethylene powder with a median particle size D₅₀ of 4 µm for a secondary particle) was added until a mass ratio of the PVDF-HPF copolymer to the polyethylene was 65:35, and stirring was fully conducted for dispersion to obtain a polymer coating material.
(2) A polyethylene microporous membrane that was prepared by a wet process and coated with a boehmite ceramic was selected as a substrate. A total thickness of the substrate was 6 µm, and a thickness of a ceramic coating was 1 µm. The polymer coating material prepared above was applied uniformly to a single side of the substrate through intermittent coating using a micro-gravure roller, such that a polymer coating was formed in an inclined, spaced, and striped pattern. A thickness of the polymer coating was 8 µm. A width of each coating strip in a coated region was 0.7 mm, and a spacing between two adjacent coating strips was 0.3 mm. An area of the polymer coating accounted for 70% of an area of the coated side of the substrate.
(3) A coated substrate was immersed in a mixed coagulation-bath solution including DMAC and water (a weight percentage of the DMAC in the mixed coagulation-bath solution was 30%), allowed to stand for 5 min, taken out, washed with water, and then oven-dried at 60°C to obtain the separator.

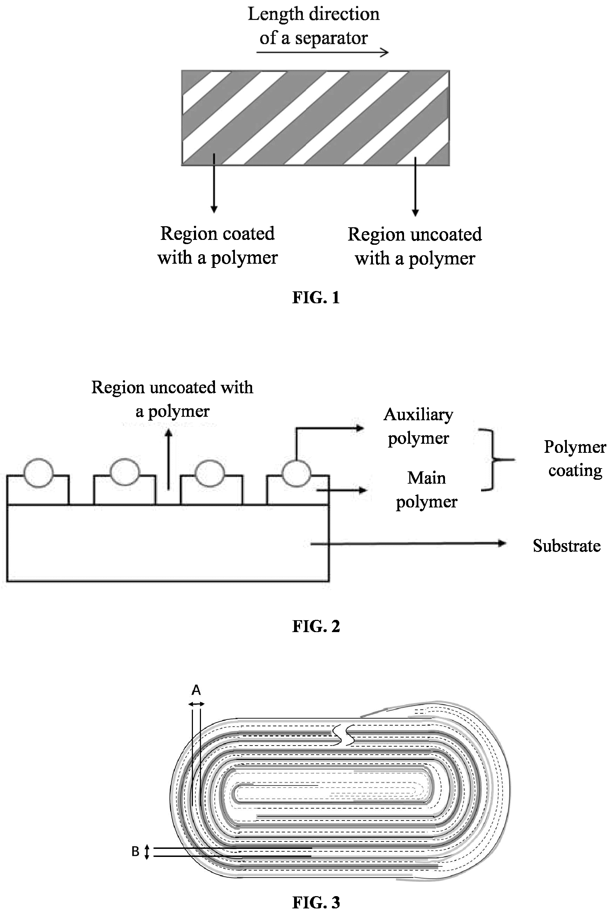

A schematic distribution diagram of the polymer coating, which was formed after the polymer coating material was applied in the step (2), was shown in FIG. 1. It can be seen that an included angle between the coating strips and a width direction of the substrate was approximately 45°.

A structural schematic diagram of the separator in this example was shown in FIG. 2. It can be observed that, due to the insolubility of the auxiliary polymer in the solvent of the coating material and the specific particle size difference, the auxiliary polymer can be embedded in the main polymer and form a protrusion on a surface of the main polymer after oven-drying. Moreover, due to the specific preparation process, the main polymer can form a porous structure after oven-drying.

A preparation method of the secondary battery in this example was as follows:

### S1. Preparation of a positive electrode

Lithium cobalt oxide as a positive electrode active material, conductive carbon black as a conductive agent, and PVDF as a binder were mixed in a mass ratio of 97:1.5:1.5, NMP was added, and evenly stirred by a vacuum mixer to obtain a positive electrode slurry with a solid content of 75 wt%. The positive electrode slurry was coated evenly on a surface of an aluminum foil with a thickness of 8 µm. A coated aluminum foil was then oven-dried at 125 °C for 1 h to obtain a positive electrode coated with a positive electrode material layer on one side. Another surface of the aluminum foil was coated through the above steps to obtain a positive electrode coated with the positive electrode material layer on two sides. The positive electrode coated with the positive electrode material layer on two sides was subjected to cold pressing, cutting, slitting, and drying under vacuum at 125 °C for 2 h to obtain a positive electrode with a dimension of 65 mm × 860 mm.

### S2. Preparation of a negative electrode

Graphite as a negative electrode active material, styrene-butadiene rubber as a binder, and sodium carboxymethylcellulose were mixed in a mass ratio of 98:1:1, deionized water was added, and evenly stirred by a vacuum mixer to obtain a negative electrode slurry with a solid content of 60 wt%. The negative electrode slurry was coated evenly on a surface of a copper foil with a thickness of 6 µm. A coated copper foil was then oven-dried at 120°C to obtain a negative electrode coated with a negative electrode material layer on one side. Another surface of the aluminum foil was coated through the above steps to obtain a negative electrode coated with the negative electrode material layer on two sides. The negative electrode coated with the negative electrode material layer on two sides was subjected to cold pressing, cutting, slitting, and drying under vacuum at 120 °C for 2 h to obtain a negative electrode with a dimension of 69 mm × 868 mm.

### S3. Preparation of an electrolyte

In an argon-filled glove box with a moisture content of less than 10 ppm, ethylene carbonate, propylene carbonate, and dimethyl carbonate were mixed in a mass ratio of 3:2:4 to obtain an organic solvent. Lithium hexafluorophosphate was then added in the organic solvent and evenly mixed to obtain the electrolyte, wherein a concentration of the lithium hexafluorophosphate was 1 mol/L.

### S4. Assembly of the secondary battery

Preparation of a lithium-ion battery: The positive electrode, the separator, and the negative electrode prepared above were stacked sequentially with the separator arranged between the positive and negative electrodes for isolation, and then wound to obtain an electrode assembly. The electrode assembly was placed into an aluminum laminated pouch, and dried to fill the electrolyte. Procedures such as vacuum sealing, standing, formation, and secondary sealing were conducted to obtain the lithium-ion battery, namely, the secondary battery. The formation was conducted at 85°C under 1.2 MPa for 50 min. Under these conditions, a porous structural layer formed by the main polymer in the separator had a compressibility coefficient of 0.1, and the auxiliary polymer had a compressibility coefficient of 0.8.

A structure of a battery cell of the secondary battery in this example in a thickness direction was shown in FIG. 3, including a main body region of the battery cell and a corner region of the battery cell. After hot pressing, a thickness of the polymer coating of the separator in the main body region of the battery cell was reduced. An inter-electrode spacing in the corner region of the battery cell of the secondary battery was defined as A, an inter-electrode spacing in the main body region of the battery cell of the secondary battery was defined as B, and A - B = 4 µm.

### Examples 2 to 5

In Examples 2 to 5, multiple examples of the separator and the secondary battery according to the present disclosure were provided. A difference between the Examples 2 to 5 and Example 1 was that, during the preparation of the separator, the median particle size D₅₀ of the secondary particle of the polyethylene powder as an auxiliary polymer was adjusted to 5 µm, 6 µm, 3 µm, and 2 µm, respectively.

### Example 6

In Examples 6 and 7, two examples of the separator and secondary battery according to the present disclosure were provided. Examples 6 and 7 were each different from Example 1 as follows:

During the preparation of the separator, an amount of the poly(vinylidene fluoride-co-hexafluoropropylene) (PVDF-HFP) copolymer was adjusted, so that a weight percentage of the PVDF-HFP copolymer in the PVDF-HFP copolymer solution was 13% and 15%, respectively.

Meanwhile, a composition proportion of the coagulation-bath solution was adjusted, so that a mass percentage of DMAC in the mixed coagulation-bath solution was 25%.

### Examples 8 and 9

In Examples 8 and 9, two examples of the separator and secondary battery according to the present disclosure were provided. A difference between Examples 8 to 9 and Example 1 was that, during the preparation of the separator, an amount of the PVDF-HFP copolymer was adjusted, so that a weight percentage of the PVDF-HFP copolymer in the PVDF-HFP copolymer solution was 5% and 4.5%, respectively.

### Example 10

In Example 10, an example of the separator and secondary battery according to the present disclosure was provided. A difference between Example 10 and Example 1 was that, during the preparation of the separator, the width of the coating strip in the coated region was 0.6 mm, the spacing between two adjacent coating strips was 0.4 mm, and the area of the polymer coating accounted for 60% of the area of the coated side of the substrate.

### Example 11

In Example 11, an example of the separator and secondary battery according to the present disclosure was provided. A difference between Example 11 and Example 1 merely was that, during the preparation of the separator, the width of the coating strip in the coated region was 0.8 mm, the spacing between two adjacent coating strips was 0.2 mm, and the area of the polymer coating accounted for 80% of the area of the coated side of the substrate.

### Example 12

In Example 12, an example of the separator and secondary battery according to the present disclosure was provided. A difference between Example 12 and Example 1 merely was that, during the preparation of the separator, the width of the coating strip in the coated region was 0.85 mm, the spacing between two adjacent coating strips was 0.15 mm, and the area of the polymer coating accounted for 85% of the area of the coated side of the substrate.

### Comparative Example 1

Comparative Example 1 was different from Example 1 in the preparation of the polymer coating of the separator, including the following steps:
S1. The same substrate as that used in Example 1 was adopted. A PVDF-HFP copolymer and an isobutyl acrylate polymer as a binder (mass ratio: 90:6) were added and dispersed in deionized water to obtain a slurry where a weight percentage of PVDF-HFP copolymer in the slurry was 8%. Then, a polyethylene powder with a median particle size D₅₀ of 4 µm for a secondary particle was added until a mass ratio of the PVDF-HFP copolymer to the polyethylene was 65:35, and stirring was fully conducted for thorough mixing to obtain a polymer coating slurry.S2. The polymer coating slurry was applied uniformly to a single side of the substrate through intermittent coating using a micro-gravure roller, such that a polymer coating was formed in an inclined, spaced, and striped pattern. A thickness of the polymer coating was 8 µm. A width of each coating strip in a coated region was 0.7 mm, and a spacing between two adjacent coating strips was 0.3 mm. An area of the polymer coating accounted for 70% of an area of the coated side of the substrate. After oven-drying at 60°C, a separator with a polymer coating on a single side was obtained.

### Comparative Example 2

A difference between Comparative Example 2 and Example 1 was merely that, during the preparation of the separator, the polyethylene powder as an auxiliary polymer was not added.

### Comparative Example 3

A difference between Comparative Example 3 and Example 1 was only that, during the preparation of the separator, the polymer coating was not applied through intermittent coating, and instead, the area of the polymer coating accounted for 100% of the area of the coated side of the substrate.

### Comparative Example 4

A difference between Comparative Example 4 and Example 1 was merely that, during the preparation of the separator, the width of the coating strip in the coated region was 7 mm and the spacing between two adjacent coating strips was 3 mm.

### Comparative Example 5

A difference between Comparative Example 5 and Example 1 was merely that, during the preparation of the separator, the width of the coating strip in the coated region was 0.55 mm, the spacing between two adjacent coating strips was 0.45 mm, and the area of the polymer coating accounted for 55% of the area of the coated side of the substrate.

Structural parameters for the separators and secondary batteries in the above examples and comparative examples were shown in Table 1.

In the above examples and comparative examples, an average pore size of a micropore in a porous structural layer of a polymer coating was determined by the following test method: Samples were collected from five random locations of a separator. A surface morphology of a sample was observed and photographed by scanning electron microscopy. A pore size of a micropore in the porous structural layer of the polymer coating in an image was analyzed by scanning electron microscopy analysis software (pore sizes of at least 20 micropores were measured per image). An average pore size was calculated.

**Table 1 Structural parameters for the separators and secondary batteries in Examples 1 to 12 and Comparative Examples 1 to 5**

| No. | Structural parameters for a polymer coating of a separator | | | | Structural parameters for a secondary battery | | |
|---|---|---|---|---|---|---|---|
| | Initial thickness of a polymer coating (µm) | Median particle size of a secondary particle of an auxiliary polymer (µm) | Average pore size of a micropore in a polymer coating (µm) | Ratio of an area of a polymer coating to an area of a coated side of a substrate | Inter-electrode spacing A in a corner region of a battery cell (µm) | Inter-electrode spacing B in a main body region of a battery cell (µm) | Value of "A - B" (µm) |
| Example 1 | 8 | 4 | 1 | 70% | 14 | 10 | 4 |
| Example 2 | 8 | 5 | 1 | 70% | 14 | 11 | 3 |
| Example 3 | 8 | 6 | 1 | 70% | 14 | 12 | 2 |
| Example 4 | 8 | 3 | 1 | 70% | 14 | 9 | 5 |
| Example 5 | 8 | 2 | 1 | 70% | 14 | 8 | 6 |
| Example 6 | 8 | 4 | 0.5 | 70% | 14 | 10 | 4 |
| Example 7 | 8 | 4 | 0.4 | 70% | 14 | 10 | 4 |
| Example 8 | 8 | 4 | 1.5 | 70% | 14 | 10 | 4 |
| Example 9 | 8 | 4 | 1.6 | 70% | 14 | 10 | 4 |
| Example 10 | 8 | 4 | 1 | 60% | 14 | 10 | 4 |
| Example 11 | 8 | 4 | 1 | 80% | 14 | 10 | 4 |
| Example 12 | 8 | 4 | 1 | 85% | 14 | 10 | 4 |
| Comparative Example 1 | 8 | 4 | No pore | 70% | 14 | 10 | 4 |
| Comparative Example 2 | 8 | Not added | 1 | 70% | 14 | 14 | 0 |
| Comparative Example 3 | 8 | 4 | 1 | 100% | 14 | 10 | 4 |
| Comparative Example 4 | 8 | 4 | 1 | 70% | 14 | 10 | 4 |
| Comparative Example 5 | 8 | 4 | 1 | 55% | 14 | 10 | 4 |

### Effect Example 1

To investigate the properties of the separator and secondary battery of the present disclosure, an initial thickness and a flatness of a battery cell of the secondary battery were recorded, and after 800 cycles at a rate of 4 C and room temperature, a capacity retention rate of the battery cell and a lithium plating condition of a negative electrode were tested, which were specifically as follows:
(1) Flatness testing of a battery cell: A thickness distribution of a battery cell was measured by a 3D profilometer. Flatness of the battery cell = Maximum thickness of the battery cell - Minimum thickness of the battery cell.
(2) Cycling testing of a battery cell at a rate of 4 C and room temperature: A secondary battery was placed in a 25°C environment, allowed to stand for 30 min, charged at a constant current of 4 C to 4.50 V, then charged at a constant voltage of 4.50 V until the current was decreased to 0.05 C, allowed to stand for 5 min, and discharged at a constant current of 0.7 C to 3.0 V. The secondary battery was repeatedly charged and discharged for 800 cycles.
(3) Determination of a lithium plating grade on a surface of a negative electrode in a main body region of a battery cell:

No lithium plating: No lithium deposition was observed on the surface of the negative electrode in the main body region of the battery cell.

Minor lithium plating: An area of lithium deposition on the surface of the negative electrode in the main body region of the battery cell was less than 5%.

Moderate lithium plating: An area of lithium deposition on the surface of the negative electrode in the main body region of the battery cell was 5% to 20%.

Severe lithium plating: An area of lithium deposition on the surface of the negative electrode in the main body region of the battery cell was more than 20%.

(4) Determination of a lithium plating grade on a surface of a negative electrode in a corner region of a battery cell:
No lithium plating: No lithium deposition was observed on the surface of the negative electrode in the corner region of the battery cell.

Minor lithium plating: An area of lithium deposition on the surface of the negative electrode in the corner region of the battery cell was less than 10%, and the lithium deposition did not extend into a flat region.

Moderate lithium plating: An area of lithium deposition on the surface of the negative electrode in the corner region of the battery cell was 10% to 40%, and the lithium deposition did not extend into the flat region.

Severe lithium plating: An area of lithium deposition on the surface of the negative electrode in the corner region of the battery cell was more than 40%, or the lithium deposition extended into the flat region.

Results of the above performance tests for the secondary batteries in the examples and comparative examples were shown in Table 2.

According to performance testing results of the secondary batteries in Examples 1 to 12 and Comparative Examples 1 to 5, it can be seen that, in a battery cell structure, a difference between inter-electrode spacings in a corner region and in a main body region of a battery cell, an average pore size of a porous structure (micropore) of a polymer coating, a median particle size of a secondary particle of an auxiliary polymer, and a ratio of an area of a polymer coating to an area of a coated side of a substrate all have a significant impact on the improvement in properties of secondary battery cells. Compared with Comparative Examples 1 to 5, due to the specific polymer coating distribution pattern, the specific distribution area, and the specific coating composition and structure of the present disclosure, the separators and secondary batteries in Examples 1 to 12 can better alleviate the lithium plating issue, lower the lithium plating risk, and they each have a relatively low thickness expansion rate of a battery cell, a good capacity retention rate and a remarkable flatness of the battery cell, resulting in balanced overall performance. The technical solution where the ratio of the area of the polymer coating to the area of the coated side of the substrate (S%) and the median particle size of the secondary particle of the auxiliary polymer (D₅₀ = d µm) satisfy the relationship of 10 ≤ 0.1 S + d ≤ 12 can be preferably selected from Examples 1 to 12. Since the ratio (S%) of the area of the polymer coating to the area of the coated side of the substrate and the median particle size (D₅₀ = d µm) of the secondary particle of the auxiliary polymer can coordinately adjust a spatial capacity of a gap, the electrolyte retention capacity of a battery cell can be enhanced while effectively avoiding the risk of lithium plating.

According to Examples 1 to 5, when a reduction in thickness of a polymer coating in a main body region of a battery cell (that is, A - B) falls within the range of from 3 µm to 5 µm and the initial thickness of the polymer coating remains constant, the smaller the thickness of a battery cell, the higher the flatness. If A - B > 5 µm, the polymer material will undergo excessive compression to cause the closure of gaps among secondary particles of the polymer material and the blockage of pores of the substrate, resulting in a certain risk of lithium plating. According to Examples 1 and 3, if A - B < 3 µm, an inter-electrode spacing in a corner region of a battery cell will be too small, and lithium plating easily occurs in the corner region of the battery cell after long-term cycling. According to Examples 1 and 5, if A - B > 5 µm, an inter-electrode spacing in a corner region of a battery cell will be too large, an ion transport pathway will be excessively long, and lithium plating induced by poor lithium intercalation easily occurs in a main body region of the battery cell after long-term cycling. However, in this case, no lithium plating occurs in the corner region of the battery cell. In contrast, when 3 µm ≤ A - B ≤ 5 µm, the issues of electrolyte depletion and lithium plating in a corner region of a battery cell after long-term cycling can be effectively addressed, and the lithium plating in the corner region of the battery cell after long-term cycling can be significantly mitigated.

It can be seen from Examples 1 and 10 to 12 and Comparative Examples 3 and 5 that, when the area of the polymer coating accounts for less than 60% of the area of the coated side of the substrate (Comparative Example 5), the polymer coating demonstrates low adhesion, and the thickness expansion of a battery cell is large. When the polymer coating is not applied through intermittent coating and the area of the polymer coating account for 100% of the area of the coated side of the substrate (Comparative Example 3), there is no spacing between polymer coating strips, resulting in a poor electrolyte retention capacity and a severe risk of lithium plating. Preferably, a ratio of the area of the polymer coating to the area of the coated side of the substrate is 60% to 80%. Controlling the area of the polymer coating within the specified range can remarkably ameliorate the phenomenon of lithium plating.

According to Examples 1 and 6 to 9 and Comparative Example 1, the alteration in the preparation steps for the separator results in the failed formation of a specific porous structure of the polymer coating (Comparative Example 1), which severely compromises the performance of a battery cell, leads to significant lithium plating, and markedly increases the thickness expansion rate of the battery cell after long-term cycling. When an average pore size of the porous structure of the polymer coating is less than 0.5 µm (Example 7), the electrolyte retention capacity of the polymer coating is poor, making it prone to lithium plating. When the average pore size of the porous structure of the polymer coating exceeds 1.5 µm (Example 9), the polymer coating has poor adhesion, resulting in a significantly increased thickness expansion rate of a battery cell. Preferably, an average pore size of the micropore in the porous structural layer of the polymer coating is 0.5 µm to 1.5 µm.

In summary, the present disclosure enhances the electrolyte retention capacity of a battery cell and maintains a relatively small thickness of the separator by optimizing a spaced distribution pattern, a distribution spacing, a coverage area, a coating composition, and a specific coating structure of the polymer coating of the separator. The present disclosure further provides a secondary battery using this separator, which significantly improves the performance of a battery cell and effectively addresses the issues of electrolyte depletion and lithium plating in a corner region of the battery cell after long-term cycling. After 800 cycles at a rate of 4 C and room temperature, the secondary battery still exhibits a high capacity retention rate and a low thickness expansion rate of the battery cell, indicating excellent electrochemical performance. Additionally, the preparation method of the separator is simple and easy to implement, and has promising generalization and application prospects.

**Table 2 Performance testing results of the secondary batteries in Examples 1 to 12 and Comparative Examples 1 to 5**

| Item | Capacity retention rate after 800 cycles at a rate of 4 C and room temperature (%) | Lithium plating of a negative electrode after 800 cycles at a rate of 4 C and room temperature | | Initial thickness of a battery cell (mm) | Flatness of a battery cell (mm) | Thickness expansion rate of a battery cell after 800 cycles at a rate of 4 C and room temperature (%) |
|---|---|---|---|---|---|---|
| | | Main body region of a battery cell | Corner region of a battery cell | | | |
| Example 1 | 85 | No lithium plating | No lithium plating | 4.980 | 0.018 | 5.3 |
| Example 2 | 84 | No lithium plating | No lithium plating | 5.010 | 0.026 | 6.5 |
| Example 3 | 77 | No lithium plating | Moderate lithium plating | 5.040 | 0.038 | 7.9 |
| Example 4 | 84 | Minor lithium plating | No lithium plating | 4.870 | 0.010 | 5.1 |
| Example 5 | 76 | Moderate lithium plating | No lithium plating | 4.850 | 0.008 | 5.0 |
| Example 6 | 83 | No lithium plating | Minor lithium plating | 4.990 | 0.018 | 5.3 |
| Example 7 | 74 | Minor lithium plating | Moderate lithium plating | 4.982 | 0.017 | 5.5 |
| Example 8 | 83 | No lithium plating | No lithium plating | 4.978 | 0.018 | 5.8 |
| Example 9 | 79 | No lithium plating | Minor lithium plating | 4.979 | 0.018 | 7.5 |
| Example 10 | 78 | Minor lithium plating | Minor lithium plating | 4.978 | 0.016 | 5.1 |
| Example 11 | 80 | No lithium plating | Minor lithium plating | 4.983 | 0.017 | 5.2 |
| Example 12 | 78 | Minor lithium plating | Moderate lithium plating | 4.985 | 0.018 | 5.2 |
| Comparative Example 1 | 75 | Moderate lithium plating | Severe lithium plating | 4.983 | 0.019 | 11.5 |
| Comparative Example 2 | 76 | Moderate lithium plating | Severe lithium plating | 4.971 | 0.004 | 6.3 |
| Comparative Example 3 | 79 | Moderate lithium plating | Severe lithium plating | 4.982 | 0.020 | 4.9 |
| Comparative Example 4 | 79 | Moderate lithium plating | Severe lithium plating | 4.983 | 0.023 | 6.9 |
| Comparative Example 5 | 75 | Moderate lithium plating | Severe lithium plating | 4.982 | 0.018 | 5.3 |

Finally, it should be noted that the above embodiments are merely intended to illustrate the technical solutions of the present disclosure, rather than to limit the protection scope of the present disclosure. Although the present disclosure is described in detail with reference to preferred embodiments, those of ordinary skill in the art should understand that various modifications or equivalent substitutions may be made to the technical solutions of the present disclosure without departing from the essence and scope of the technical solutions of the present disclosure.

## Claims

1. A separator, comprising: a substrate and a polymer coating formed on at least one side of the substrate, wherein the polymer coating comprises at least two coating strips spaced apart from each other;
each of the at least two coating strips of the polymer coating comprises a main polymer and an auxiliary polymer; the main polymer forms a porous structural layer; and the auxiliary polymer is embedded in the porous structural layer and forms a protrusion on a surface of the porous structural layer.

2. The separator according to claim 1, wherein an average pore size of a micropore in the porous structural layer is 0.5 µm to 1.5 µm; and/or
a median particle size D₅₀ of a secondary particle of the auxiliary polymer is 3 µm ≤ D₅₀ ≤ 15 µm.

3. The separator according to claim 1 or 2, wherein the porous structural layer formed by the main polymer has a compressibility coefficient R₁ of 0.05 ≤ R1 ≤ 0.3 under a hot pressing condition of 85°C, 1.2 MPa, and 50 min; and/or
the auxiliary polymer has a compressibility coefficient R₂ of 0.6 ≤ R₂ < 1.0 under a hot pressing condition of 85°C, 1.2 MPa, and 50 min; and/or
the porous structural layer formed by the main polymer has a thickness of 0.5 µm to 5 µm, and the protrusion formed by the auxiliary polymer has a height of 1 µm to 10 µm.

4. The separator according to any one of claims 1 to 3, wherein a spacing between two adjacent ones of the at least two coating strips of the polymer coating is 0.15 mm to 2.5 mm; and/or
a width of each of the at least two coating strips is 0.5 mm to 3 mm.

5. The separator according to any one of claims 1 to 4, wherein a ratio of an area of the polymer coating to an area of a coated side of the substrate is 60% to 85%.

6. The separator according to claim 4, wherein the spacing between two adjacent ones of the at least two coating strips of the polymer coating is 0.2 mm to 0.4 mm; and/or
the width of each of the at least two coating strips is 0.6 mm to 0.85 mm.

7. The separator according to any one of claims 1 to 6, wherein a thickness of the polymer coating is 5 µm to 10 µm; and/or
the ratio of the area of the polymer coating to the area of the coated side of the substrate is defined as S, in %, the median particle size D₅₀ of the secondary particle of the auxiliary polymer is defined as d, in µm, and the S and the d satisfies a quantitative relationship of 10 ≤ 0.1 S + d ≤ 12.

8. The separator according to any one of claims 1 to 7, wherein the at least two coating strips are each inclined to a width direction of the substrate at an included angle, and the included angle between each of the at least two coating strips and the width direction of the substrate is 30° to 60°.

9. The separator according to any one of claims 1 to 8, wherein the main polymer is at least one selected from the group consisting of polyvinylidene fluoride (PVDF), a poly(vinylidene fluoride-co-hexafluoropropylene) copolymer, a poly(vinylidene fluoride-co-trifluoroethylene) copolymer, a poly(vinylidene fluoride-co-chlorotrifluoroethylene) copolymer, a poly(vinylidene fluoride-co-tetrafluoroethylene) copolymer, a poly(vinylidene fluoride-co-trifluoroethylene-co-chlorotrifluoroethylene) copolymer, a poly(vinylidene fluoride-co-trifluoroethylene-co-chlorofluoroethylene) copolymer, and polymethyl methacrylate (PMMA); and/or
the auxiliary polymer is at least one selected from the group consisting of polyethylene, polypropylene, polybutene, poly(4-methyl-1-pentene), polytetrafluoroethylene, polyethylene wax, and oxidized polyethylene wax.

10. A preparation method of the separator according to any one of claims 1 to 9, comprising following steps:
(1) dissolving the main polymer in an organic solvent to obtain a main polymer solution, adding and dispersing the auxiliary polymer to obtain a polymer coating material; and
(2) applying the polymer coating material on at least one side of the substrate in a spaced pattern, soaking a coated substrate in a coagulation-bath solution, taking out a soaked substrate, washing, and oven-drying to obtain the separator.

11. The preparation method of the separator according to claim 10, wherein the organic solvent is at least one selected from the group consisting of N-methylpyrrolidone (NMP), N,N-dimethylformamide, N,N-dimethylacetamide (DMAC), and acetone; and the coagulation-bath solution comprises at least one selected from the group consisting of the NMP, the N,N-dimethylformamide, the DMAC, the acetone, ethanol, isopropanol, and water.

12. The preparation method of the separator according to claim 10 or 11, wherein a weight percentage of the main polymer in the main polymer solution is 4% to 15%; and/or
a mass ratio of the main polymer to the auxiliary polymer is (3-4):(1-2).

13. A secondary battery, comprising a positive electrode, the separator according to any one of claims 1 to 9, and a negative electrode successively, wherein when an inter-electrode spacing in a corner region of a battery cell of the secondary battery is defined as A and an inter-electrode spacing in a main body region of the battery cell of the secondary battery is defined as B, the A and the B satisfy a relationship of 3 µm ≤ A - B ≤ 5 µm.

14. An electric device, comprising the secondary battery according to claim 13.
